Europäisches Patentamt

European Patent Office

Office européen des brevets

(19)

(11) EP 0 805 914 B1

(12) EUROPÄISCHE PATENTSCHRIFT

(45) Veröffentlichungstag und Bekanntmachung des Hinweises auf die Patenterteilung:
09.02.2000 Patentblatt 2000/06

(21) Anmeldenummer: 96945829.8

(22) Anmeldetag: 24.10.1996

(51) Int Cl.7: F01N 3/18

(86) Internationale Anmeldenummer:
PCT/DE96/02030

(87) Internationale Veröffentlichungsnummer:
WO 97/15750 (01.05.1997 Gazette 1997/19)

(54) **VERFAHREN ZUR STEUERUNG DES ABGASVERHÄLTNISSES VON KRAFTSTOFF ZU SAUERSTOFF IM ABGASTRAKT VOR EINEM KATALYSATOR**

PROCESS FOR REGULATING THE FUEL-OXYGEN RATIO OF EXHAUST GAS UPSTREAM OF A CATALYTIC CONVERTER

PROCEDE DE REGULATION DU RAPPORT CARBURANT-OXYGENE DANS LES GAZ D'ECHAPPEMENT EN AMONT D'UN CATALYSEUR

(84) Benannte Vertragsstaaten:
DE FR GB SE

(30) Priorität: 26.10.1995 DE 19539937

(43) Veröffentlichungstag der Anmeldung:
12.11.1997 Patentblatt 1997/46

(73) Patentinhaber: SIEMENS AKTIENGESELLSCHAFT
80333 München (DE)

(72) Erfinder:
• BAYERLE, Klaus
  D-93051 Regensburg (DE)
• ANGERMAIER, Anton
  D-84172 Thann (DE)

(56) Entgegenhaltungen:
EP-A- 0 659 986          DE-A- 4 225 361
DE-A- 4 324 506          FR-A- 2 677 122
FR-A- 2 726 031          US-A- 5 136 842
US-A- 5 400 591

## Beschreibung

Die Erfindung betrifft ein Verfahren zur Steuerung des Abgasverhältnisses von Kraftstoff zu Sauerstoff im Abgastrakt vor einem Katalysator entsprechend dem Oberbegriff des Anspruchs 1.

Aus der DE 41 41 946 A1 ist bereits ein Verfahren zur Steuerung des Abgasverhältnisses von Kraftstoff zu Sauerstoff vor dem Katalysator einer Brennkraftmaschine bekannt. Bei diesem Verfahren wird mit einer Sekundärluftpumpe Luft in den Abgastrakt vor dem Katalysator eingeblasen. Die von der Sekundärluftpumpe geförderte Luftmenge wird dabei an die Abgasmenge angepaßt. Dazu wird die Sekundärluftpumpe entweder unter Berücksichtigung von der Last und der Drehzahl der Brennkraftmaschine vorgesteuert oder bei betriebsbereiter Lambdaregelung geregelt. Die Steuerung und die Regelung der Sekundärluftmasse ist relativ träge, so daß ein gewünschtes Abgasverhältnis nur relativ ungenau einstellbar ist.

Aus der FR 2 677 122 ist ein Prüfverfahren und eine Vorrichtung zur Luftdosierung in die Abgase einer Brennkraftmaschine bekannt, bei dem eine gesteuerte Änderung der eingeblasenen Luftmenge vorgesehen und die damit einhergehende Änderung der Anreicherung der Abgase beobachtet wird. Die auf diese Weise gemessene Änderung der Anreicherung wird mit einer theoretischen Änderung dieser Anreicherung verglichen wobei dieser theoretische Wert in Abhängigkeit von der gesteuerten Änderung der eingeblasenen Luftmenge berechnet wird. Der Betriebszustand der Sekundärluftvorrichtung wird auf der Grundlage des Ergebnisses dieses Vergleiches diagnostiziert.

Ziel der Erfindung ist es, die Aufheizung des Katalysator zu optimieren, insbesondere die Aufheizzeit zu verkürzen.

Die Aufgabe wird durch die Merkmale des Anspruchs 1 gelöst. Das Wesen der Erfindung beruht darin, das Abgasverhältnis vor dem Katalysator während der Warmlaufphase des Katalysators in Abhängigkeit von der Sekundärluftmasse so einzustellen, daß es innerhalb eines vorgegebenen Wertebereiches liegt.

Aus der EP 0 659 986 A1 ist ein Verfahren zur Überwachung eines Sekundärluftsystems in Verbindung mit dem Abgassystem eines Kraftfahrzeugs bekannt. Dabei wird ein Signal für den Sekundärluftmassenstrom ermittelt aus einem Signal für den Ansaugluftstrom, einem Signal für das rechnerisch ermittelte Verhältnis von Ansaugluftstrom zu pro Zeit zugemessenen Kraftstoff, einem Signal für das mittels einer Sonde ermittelte Luft-/Kraftstoffverhältnis stromab der Einmündung einer Sekundärluftleitung in den Abgaskanal. Die Funktionsfähigkeit des Sekundärluftsystems wird anhand des Signals für den Sekundärluftstrom beurteilt, wobei der Ansaugluftstrom der von der Brennkraftmaschine angesaugte Luftmengen oder Luftmassenstrom ist.

Vorteilhafte Ausbildungen der Erfindung sind in den Unteransprüchen angegeben.

Zur Erläuterung der Erfindung wird auf die Figuren verwiesen; es zeigen

Figur 1 eine Anordnung zur Durchführung des Verfahrens,
Figur 2 eine Ventilanordnung,
Figur 3 eine erste Kennlinie für das Abgasverhältnis,
Figur 4 eine zweite Kennlinie für das Abgasverhältnis und
Figur 5 eine Kennlinie für die Sekundärluftmasse.

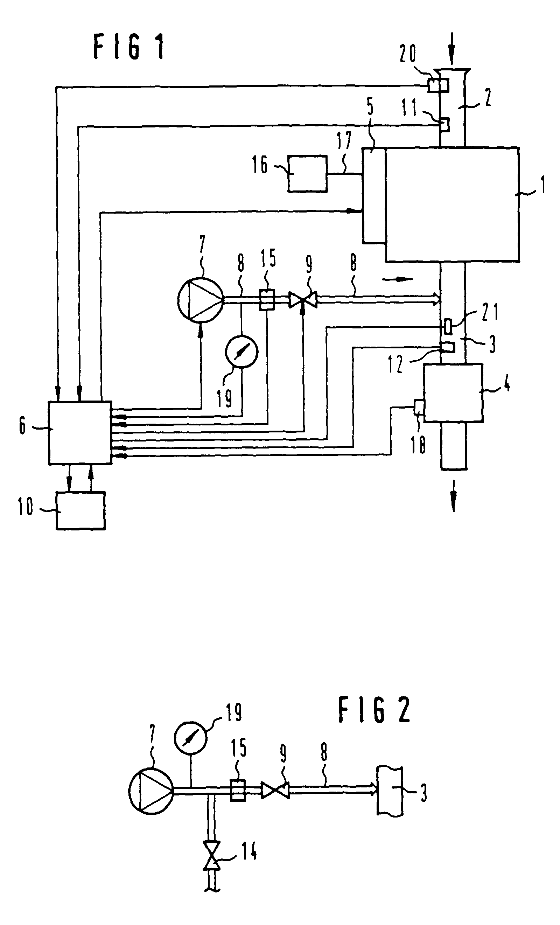

Figur 1 zeigt eine Brennkraftmaschine 1, die einen Ansaugtrakt 2 und einen Abgastrakt 3 aufweist. Im Ansaugtrakt 2 ist ein Luftmassenmesser 11 und im Abgastrakt 3 ist eine Abgassonde 12 und ein erster Drucksensor 21 angeordnet. Die Brennkraftmaschine 1 ist über den Abgastrakt 3 mit einem Katalysator 4 verbunden. Eine Sekundärluftpumpe 7 ist über eine Luftleitung 8 und ein Luftventil 9 mit dem Abgastrakt 3 verbunden. An der Brennkraftmaschine 1 ist eine Einspritzanlage 5 angeordnet, die über eine Steuerleitung an ein Steuergerät 6 und über eine Versorgungsleitung 17 an einen Kraftstofftank 16 angeschlossen ist.

Das Steuergerät 6 steht mit einem Speicher 10 über eine Datenleitung in Verbindung und ist weiterhin über Steuerleitungen mit der Sekundärluftpumpe 7 und dem Luftventil 9 und über eine Signalleitung mit dem Luftmassenmesser 11 und dem ersten Drucksensor 21 verbunden. Das Luftventil 9 ist als Auf/Zu-Ventil ausgebildet, das von dem Steuergerät 6 gesteuert wird. An dem Katalysator 4 ist ein Temperatursensor 18 angeordnet, der über eine Signalleitung die Temperatur des Katalysators 4 an das Steuergerät 6 weitergibt.

Die Sekundärluftpumpe 7 fördert in einer einfachen Ausführung eine konstante Sekundärluftmasse pro Zeiteinheit oder ist in einer aufwendigeren Ausführung von dem Steuergerät 6 in der Drehzahl regelbar, so daß die Sekundärluftmasse pro Zeiteinheit einstellbar ist. Die Einstellung der Sekundärluftmasse ist entweder konstant oder wird in Abhängigkeit von einem Kennfeld vorgenommen, das im Speicher 10 abgelegt ist. Das Kennfeld gibt die vorzusteuernde Sekundärluftmasse pro Zeiteinheit in Abhängigkeit von der Motorluftmasse oder in Abhängigkeit vom Abgasdruck in der Abgasleitung 3 vor dem Katalysator 4 an, wobei der Abgasdruck eine Funktion von der Motorluftmasse ist. Mit Motorluftmasse ist die Luft bezeichnet, die von der Brennkraftmaschine über den Ansaugtrakt 2 angesaugt wird.

Der Luftmassenmesser 11 ermittelt die in die Brennkraftmaschine 1 eingesaugte Motorluftmasse pro Zeiteinheit und gibt diese an das Steuergerät 6 weiter. Die Abgassonde 12 ermittelt das Abgasverhältnis, insbesondere ob das Verhältnis von Kraftstoff zu Sauerstoff -im Folgenden als Abgasverhältnis bezeichnet- im Abgastrakt 3 kleiner oder größer 1 ist, und gibt diese Information an das Steuergerät 6 weiter.

Bei einem stöchiometrischen Verhältnis von Kraftstoff zu Sauerstoff ist das Abgasverhalten λ=1. Luftüberschuß nach der Verbrennung (mager) ist durch λ>1 und Kraftstoffüberschuß nach der Verbrennung (fett) durch λ<1 gekennzeichnet.

Die Kraftstoffmenge wird von dem Steuergerät 6 anhand einer Formel berechnet, wobei eine Basiseinspritzzeit mit einem Faktor multipliziert wird, der von der vorgesteuerten oder der gemessenen Sekundärluftmasse und dem Sollwert des Abgasverhaltens abhängt. Die Basiseinspritzzeit wird aus einem Kennfeld ausgelesen, das im Speicher 10 abgelegt ist und die Basiseinspritzzeit in Abhängigkeit von der Motorlast und der Drehzahl festlegt.

Da die Vorsteuerung der Sekundärluftmasse träge ist, wird durch einen Luftmassenmesser 15, der zwischen die Sekundärluftpumpe 7 und das Sekundärluftventil 9 eingebaut ist, die tatsächlich geförderte Sekundärluftmasse pro Zeiteinheit bestimmt und an das Steuergerät 6 weitergegeben. Ein Luftmassenmesser 15 hat den Vorteil, daß automatisch eine Berücksichtigung der Umgebungstemperatur und der Luftdichte gegeben ist.

Zur Erläuterung des technischen Umfelds der Erfindung wird im nachfolgenden eine andere Möglichkeit zur Bestimmung der von der Sekundärluftpumpe geförderten Sekundärluftmasse angegeben. Sie ist ebenfalls in Figur 1 dargestellt und beruht in der Verwendung eines zweiten Drucksensors 19, der an die Verbindungsleitung 8 zwischen der Sekundärluftpumpe 7 und dem Luftventil 9 angeschlossen ist. Der in der Verbindungsleitung 8 gemessene Druck ist abhängig von der geförderten Sekundärluftmasse. Für eine ausreichende Genauigkeit ist es jedoch erforderlich, daß die Temperatur der Sekundärluftmasse mitberücksichtigt wird. Dazu wird näherungsweise ein Ansauglufttemperatursensor 20 verwendet, der im Ansaugtrakt 2 der Brennkraftmaschine 1 angeordnet ist und die Temperatur der Ansaugluft mißt und an das Steuergerät 6 weitergibt.

Im Speicher 10 ist ein Kennfeld abgelegt, das die geförderte Sekundärluftmasse in Abhängigkeit von dem gemessenen Druck und der gemessenen Ansauglufttemperatur angibt. In diesem Fall ermittelt das Steuergerät 6 anhand des gemessenen Drukkes über das Kennfelder die Sekundärluftmasse und berechnet daraus die einzuspritzende Kraftstoffmenge.

Eine Weiterbildung der Erfindung besteht darin, daß die Sekundärluftpumpe 7 mit einer konstanten Drehzahl Sekundärluft fördert und die dem Abgastrakt 3 zugeführte Sekundärluftmasse über das Luftventil 9 eingestellt wird, wobei das Luftventil 9 im Querschnitt von dem Steuergerät 6 gesteuert wird.

Eine weitere Ausführungsform der Erfindung besteht darin, die Sekundärluftmenge über ein Dosierventil 14 zu regeln, wie in Figur 2 dargestellt. Dabei ist zwischen der Sekundärluftpumpe 7 und dem Luftventil 9 eine Abzweigungsleitung 13 angeschlossen, die den Ausgang der Sekundärluftpumpe 7 über das Dosierventil 14 mit der Umgebung verbindet. Das Luftventil 9 ist in diesem Ausführungsbeispiel als Auf/Zu-Ventil ausgebildet und ermöglicht somit nur die zwei Schaltstellungen geöffnet oder geschlossen. Das Dosierventil 14 ist im Querschnitt regelbar ausgebildet und wird vom Steuergerät 6 gesteuert. Die Sekundärluftmasse, die in den Abgastrakt 3 eingeblasen wird, wird durch den Öffnungsquerschnitt des Dosierventils 14 festgelegt. Soll Sekundärluft in den Abgastrakt 3 eingeblasen werden, so wird das Luftventil 9 geöffnet und das Dosierventils 14 geschlossen. Bei einem geschlossenen Dosierventil 14 wird die gesamte Sekundärluft, die von der Sekundärluftpumpe 7 gefördert wird, in den Abgastrakt 3 eingeblasen. Je weiter das Dosierventil 14 geöffnet wird, um so weniger Sekundärluftmasse wird in den Abgastrakt 3 eingeblasen.

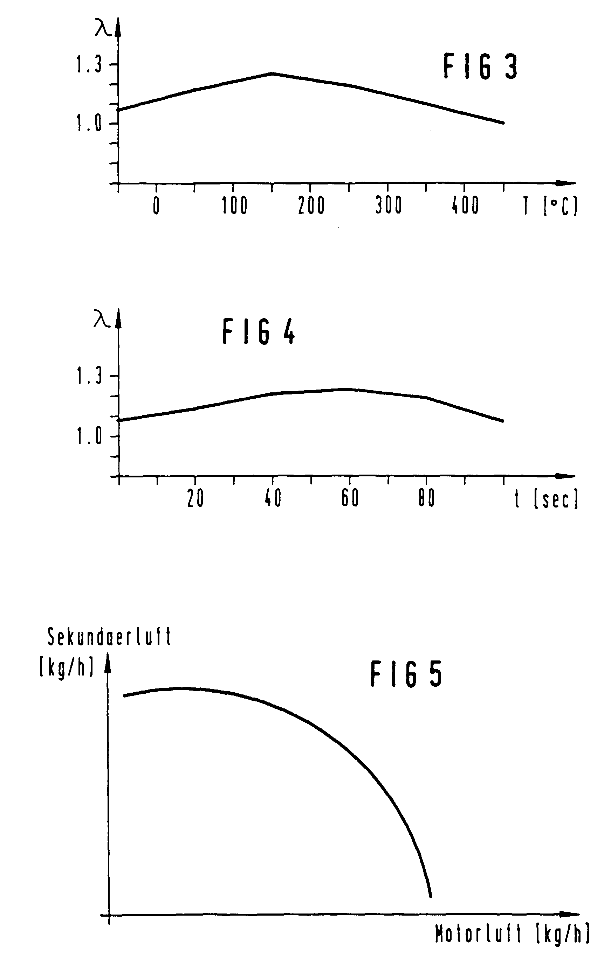

Figur 3 zeigt eine Kennlinie für den Sollwert des Abgasverhältnisses vor dem Katalysator 4 in Abhängigkeit von der Katalysatortemperatur T, die zu einer schnellen Erwärmung des Katalysators 4 führt.

Figur 4 zeigt eine Kennlinie für den Sollwert des Abgasverhältnisses vor dem Katalysator 4 in Abhängigkeit von der Zeit, die seit dem Start der Brennkraftmaschine 1 vergangen ist, die zu einer schnellen Erwärmung des Katalysators 4 führt.

Figur 5 zeigt eine Kennlinie, die die in den Abgastrakt 3 einzublasende Sekundärluftmasse in Abhängigkeit von der Motorluftmasse angibt.

Im folgenden wird anhand der Figuren die Wirkung des erfindungsgemäßen Verfahrens erläutert.

Für die Erreichung von besonders niedrigen Abgaswerten ist es notwendig, daß der Katalysator innerhalb einer möglichst kurzen Zeit auf eine Betriebstemperatur von ca. 300° aufgeheizt wird. Dies wird unter anderem dadurch erreicht, daß ein mageres Abgasgemisch mit einer Luftzahl von λ>1, vorzugsweise im Bereich von 1,0 bis 1,3 nach der Brennkraftmaschine 1 im Abgastrakt 3 vor dem Katalysator 4 von dem Steuergerät 6 eingestellt wird.

Das Abgasverhältnis vor dem Katalysator 4 berechnet sich aus der Motorluftmasse, die der Brennkraftmaschine 1 zugeführt wird und der Sekundärluftmasse, die von der Sekundärluftpumpe 7 in den Abgastrakt 3 eingeblasen wird, bezogen auf die Kraftstoffmenge, die von der Einspritzanlage 5 der Brennkraftmaschine 1 zugeführt wird.

Zur Einstellung des Abgasverhältnisses auf den jeweiligen Sollwert der Kennlinie der Figur 3 oder 4 wird eine Einspritzmenge, die von der Einspritzanlage 5 in die Brennkraftmaschine 1 eingespritzt wird, durch einen fest vorgegebenen Basiswert berechnet, der mit einem Faktor multipliziert wird, der in Abhängigkeit von der Sekundärluftmasse und dem Sollwert des Abgasverhältnisses im Abgastrakt 3 berechnet wird. Durch die Multiplikation mit dem Faktor ergibt sich eine Wichtung der Einspritzmenge in Abhängigkeit von der Sekundärluftmasse.

Für eine einfache Bemessung wird die Einspritzzeit durch eine Basiseinspritzzeit vorgegeben, die zu einem Verbrennungsgemisch von $\lambda = 1$ in der Brennkraftmaschine 1 führt, wenn keine Sekundärluft eingeblasen wird. Die Basiseinspritzzeit wird für die Dauer des Betriebes der Sekundärluftpumpe 7 mit einem entsprechenden Wichtungsfaktor multipliziert, der die tatsächliche Sekundärluftmasse und den Sollwert des Abgasverhältnisses berücksichtigt. Auf diese Weise ist eine genaue Anpassung der Einspritzzeit an die tatsächliche Sekundärluftmasse und an den Sollwert des Abgasverhältnisses möglich.

Im folgenden wird die Formel für die Berechnung der Einspritzzeit und des Wichtungsfaktors angegeben. Die Einspritzzeit ti berechnet sich folgendermaßen:

$$ti = (ti_b + c) * (1+fak),$$

wobei $ti_b$ die Basiseinspritzzeit mit dem Wert von beispielsweise 1 msek, c einen Korrekturwert für instationäre Betriebszustände der Brennkraftmaschine bezeichnet, und fak den Wichtungsfaktor darstellt. Für die Basiseinspritzzeit $ti_b$ sind Kennfelder im Speicher 10 abgelegt, die die Basiseinspritzzeit in Abhängigkeit von der Drehzahl und/oder der Motorlast angeben.

Der Wichtungsfaktor fak berechnet sich folgendermaßen:

$$fak = ((lmb + lms)/ (lvk \cdot lmb))-1,$$

wobei

    lmb die Motorluftmasse in kg/Stunde,
    lms die Sekundärluftmasse in kg/Stunde,
    lvk den Sollwert des Abgasverhältnisses vor dem Katalysator 4 bezeichnet.

Der Katalysator wird in möglichst kurzer Zeit auf die Betriebstemperatur aufgeheizt, indem entsprechend der Figur 3 oder der Figur 4 der Sollwert des Abgasverhältnisses eingestellt wird. Das Abgasverhältnis wird dabei in Abhängigkeit von der Temperatur des Katalysators entsprechend Figur 3 oder in Abhängigkeit von der Zeit entsprechend Figur 4 festgelegt, die seit dem Start der Brennkraftmaschine 1 vergangen ist.

Die Temperatur des Katalysators wird entweder mit dem Temperatursensor 18 gemessen oder über eine Ersatztemperaturberechnung ermittelt. Bei der Ersatztemperaturberechnung wird z.B. in Abhängigkeit von Parametern der Brennkraftmaschine die Temperatur des Katalysators 4 berechnet.

Zur Vermeidung von Verbrennungsaussetzern durch eine zu große Anfettung des Verbrennungsgemisches wird die maximal zulässige Einspritzmenge (Anfettung) in einer Weiterbildung der Erfindung auf einen Maximalwert begrenzt. Dies erfolgt dadurch, daß der Wichtungsfaktor fak mit einem vorgegebenen maximalen Wichtungsfaktor verglichen wird und auf den maximalen Wichtungsfaktor festgelegt wird, wenn der Wichtungsfaktor fak den maximalen Wichtungsfaktor überschreitet.

**Patentansprüche**

1. Verfahren zur Steuerung des Abgasverhältnisses von Kraftstoff zu Sauerstoff im Abgastrakt einer Brennkraftmaschine, wobei über eine vorgesteuerte Sekundärluftpumpe Sekundärluft vor dem Katalysator in den Abgastrakt eingeblasen wird, **dadurch gekennzeichnet,** daß die geförderte Sekundärluftmasse mittels eines Luftmassenmessers (15) gemessen wird und eine Kraftstoffbasismenge mit einem Wichtungsfaktor und einem Sollwert für das Abgasverhältnis vor dem Katalysator (4) eingestellt wird, wobei in den Wichtungsfaktor der Meßwert der Sekundärluftmasse eingeht

2. Verfahren nach Anspruch 1, dadurch gekennzeichnet, daß die Sekundärluftmasse in Abhängigkeit vom Abgasdruck im Abgastrakt (3) vor dem Katalysator (4) vorgesteuert wird.

3. Verfahren nach Anspruch 1, dadurch gekennzeichnet, daß die Sekundärluftmasse abhängig von der Motorluftmasse, die der Brennkraftmaschine (5) zugeführt wird, vorgesteuert wird.

4. Verfahren nach Anspruch 1, dadurch gekennzeichnet, daß der Sollwert des Abgasverhältnisses 1,0 bis 1,3 beträgt.

5. Verfahren nach Anspruch 1, dadurch gekennzeichnet, daß der Sollwert des Abgasverhältnisses von der Temperatur des Katalysators (4) abhängig ist.

6. Verfahren nach Anspruch 1, dadurch gekennzeichnet, daß der Sollwert des Abgasverhältnisses von der Betriebsdauer der Brennkraftmaschine (1) abhängt, die seit einem Start der Brennkraftmaschine (1) vergangen ist.

7. Verfahren nach Anspruch 2, dadurch gekennzeichnet, daß die Sekundärluftmasse, die dem Abgastrakt (3) zugeführt wird, über ein Luftventil (9) mit Auf/Zu-Funktion und über ein Dosierventil (14), das überschüssige Sekundärluft an die Umgebung abgibt, geregelt wird.

8. Verfahren nach Anspruch 1, dadurch gekennzeichnet,
daß die Kraftstoffbasismenge mit dem Wichtungsfaktor multipliziert wird.

9. Verfahren nach Anspruch 8, dadurch gekennzeichnet,
daß der Wichtungsfaktor auf einen Maximalwert begrenzt wird.


**Claims**

1. Method of controlling the exhaust gas fuel-to-oxygen ratio in the exhaust gas channel of an internal combustion engine, whereby secondary air is injected into the exhaust gas channel preceding the catalytic converter via a precontrolled secondary air pump,
   **characterised in that**
   the delivered secondary air mass is measured by means of an air-mass meter (15), and in that a basic fuel quantity is set, together with a weighting factor and a target value for the exhaust gas ratio preceding the catalytic converter (4), the measured value of the secondary air mass entering into the weighting factor.

2. Method in accordance with Claim 1, characterised in that the secondary air mass is precontrolled as a function of the exhaust gas pressure in the exhaust gas channel (3) preceding the catalytic converter (4).

3. Method in accordance with Claim 1, characterised in that the secondary air mass is precontrolled as a function of the engine air mass fed to the internal combustion engine (5).

4. Method in accordance with Claim 1, characterised in that the target value of the exhaust gas ratio is between 1.0 and 1.3.

5. Method in accordance with Claim 1, characterised in that the target value of the exhaust gas ratio depends on the temperature of the catalytic converter (4).

6. Method in accordance with Claim 1, characterised in that the target value of the exhaust gas ratio depends on the operating time of the internal combustion engine (1) which has elapsed since the starting of the internal combustion engine (1).

7. Method in accordance with Claim 2, characterised in that the secondary air mass which is fed to the exhaust gas channel (3) is controlled via an air valve (9) with on/off function, and via a dosing valve (14) which passes on excess secondary air to the external environment.

8. Method in accordance with Claim 1, characterised in that the basic quantity of fuel is multiplied by the weighting factor.

9. Method in accordance with Claim 8, characterised in that the weighting factor is limited to a maximum value.


**Revendications**

1. Procédé de commande de la proportion de carburant par rapport à l'oxygène dans les gaz d'échappement dans la conduite d'échappement d'un moteur à combustion interne, en insufflant de l'air secondaire en amont du catalyseur, au moyen d'une pompe d'air secondaire commandée au préalable dans la conduite d'échappement,
   caractérisé en ce que
   la masse d'air secondaire fournie est mesurée au moyen d'un capteur (15) de mesure de la masse d'air et en ce qu'une quantité de base de carburant est réglée au moyen d'un facteur de pondération et d'une valeur de consigne pour la proportion de gaz d'échappement, étant entendu que cette valeur de mesure de la masse d'air secondaire entre dans le facteur de pondération.

2. Procédé suivant la revendication 1, caractérisé en ce que la masse d'air secondaire est commandée au préalable en fonction de la pression des gaz d'échappement dans la conduite d'échappement (3), en amont du catalyseur (4).

3. Procédé suivant la revendication 1, caractérisé en ce que la masse d'air secondaire est commandée au préalable en fonction de la masse d'air moteur qui est envoyée au moteur à combustion interne (5).

4. Procédé suivant la revendication 1, caractérisé en ce que la valeur de consigne de la proportion de gaz d'échappement est comprise entre 1,0 et 1,3.

5. Procédé suivant la revendication 1, caractérisé en ce que la valeur de consigne de la proportion de gaz d'échappement dépend de la température du catalyseur (4).

6. Procédé suivant la revendication 1, caractérisé en ce que la valeur de consigne de la proportion de gaz d'échappement dépend de la durée de fonctionnement du moteur à combustion interne (1) qui s'est écoulée depuis un démarrage du moteur à combustion interne (1)

7. Procédé suivant la revendication 2, caractérisé en ce que la masse d'air secondaire qui est envoyée à la conduite d'échappement (3) est réglée au moyen d'une vanne d'air (9) fonctionnant par tout ou rien et au moyen d'une vanne de dosage (14) qui renvoie à l'environnement de l'air secondaire en excédent.

8. Procédé suivant la revendication 1, caractérisé en ce que la quantité de base de carburant est multipliée par le facteur de pondération.

9. Procédé suivant la revendication 8, caractérisé en ce que le facteur de pondération est limité à une valeur maximale.

FIG 1

FIG 2

FIG 3

FIG 4

FIG 5